(19) **Europäisches Patentamt European Patent Office Office européen des brevets**

(11) **EP 4 752 623 A1**

(12) **EUROPEAN PATENT APPLICATION**

(43) Date of publication:
03.06.2026 Bulletin 2026/23

(21) Application number: 25382994.9

(22) Date of filing: 18.09.2025

(51) International Patent Classification (IPC):
**G02C 7/04** *(2006.01)*

(52) Cooperative Patent Classification (CPC):
**G02C 7/047**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.11.2024 EP 24383295**

(71) Applicant: **PAUNE FABRE, Jaime**
**08980 Barcelona SANT FELIU DE LLOBREGAT (ES)**

(72) Inventor: **PAUNE FABRE, Jaime**
**08980 Barcelona SANT FELIU DE LLOBREGAT (ES)**

(74) Representative: **Ponti & Partners, S.L.P**
**Edifici PRISMA**
**Av. Diagonal núm. 611-613, Planta 2**
**08028 Barcelona (ES)**

(54) **AN ORTHOKERATOLOGY CONTACT LENS**

(57) The present invention relates to an orthokeratology contact lens (L) comprising an inner surface with a back optical zone configured and arranged to modify the optics of the cornea of a wearer's eye, wherein the back optical zone has a central circular area (1a) and an annular area (1b) radially extending outwardly from the end of the central circular area (1a).

In a cross-section of the orthokeratology contact lens (L), the central circular area (1a) and the annular area (1b) conform a continuous polynomial-shaped curvature path, wherein:
- the central circular area (1a) has a spherical radius or a radius having an eccentricity (e value) between 0 and 1, and
- the annular area (1b) has a radius of curvature that gradually, in progressive mode, and not linearly, increases from the end of the central circular area (1a) to an end of the back optical zone, increasing the distance from the reference curve.

Fig. 1

EP 4 752 623 A1

## Description

FIELD OF THE INVENTION

The present invention relates to an orthokeratology contact lens, made to precisely modify the optics of the wearer's eye, correcting accurately the refractive state of the eye and optimizing the amount of midperipheral refraction to control myopia effectively.

BACKGROUND OF THE INVENTION

Orthokeratology, or Ortho-k, is the use of specially designed and fitted reverse geometry rigid contact lenses to temporarily reshape the corneal epithelium of the cornea to improve vision. Orthokeratology (OK) lenses, also called Reverse Geometry refers to the adjacent or following curve to Optic Zone that has a shorter radius of curvature. Both coupled curves create a vertex on the circular junction that induces hydrodynamic forces responsible of epithelial cells changes.

These hydrodynamic suction forces induce an annular epithelial cell accumulation that coupled with central lens pressure produces a flattened central corneal area and a steepened mid-peripheral area. In fact, a flattened or less curved surface means less refractive power and hence the correction of myopic defect. Meanwhile, mid-peripheral steepened ring means a more curved shape and by consequence a higher dioptric power. These peripheral optic changes are responsible for the reduction in axial length growth in myopic children. Multiple scientific trials have shown that the optical signals arising from the reshaped cornea, including ocular aberration and defocus, play a crucial role in slowing down the progression of myopia. In today orthokeratology lenses produce these signals only in relationship with the total amount or correction. Hence, the higher the correction, the more optical signals for myopia treatment will be delivered, and when low myopia is corrected the signals are week for a good myopia control effect.

The optical zone is defined as the central area of the lens. The curvature of its front surface is chosen to achieve the desired power of the lens once on eye's wearer. Curvature of its central posterior, inner or back surface is called Base Curve, that is the central posterior (inside surface) curve of a contact lens. The measurement of the base curve is actually that of the radius of curvature of the sphere from which the lens is made and in orthokeratology is chosen to achieve the desired molding of the epithelium.

Even the shape of the normal untouched cornea follows close to an aspheric surface which is normally flatter toward its periphery. Orthokeratology (OK) lenses are generally designed with a single spherical or aspherical surface; that is, the inner lens surface is formed by connecting multiple spherical curves with different radii of curvature extended from the end of the called optical zone towards the edge. To correct myopia the radius of curvature of the optical zone, in the back or inner surface in contact with the eye, is just larger that the final radius of curvature intended to finally obtain on a molded cornea. In fact, is calculated by adding to the final desired corneal radius an extra value called "Jessen Factor" or "Compression Factor" that falls between 0.75 to 1.50 D (0.15 to 0.30 mm). Once the lens will be applied over a given cornea the difference in radius of curvature of both surfaces (corneal and contact lens) will result in a separation, space, distance or measured height once calculated in axial mode at the end of the optical zone. This height at the end of the optical zone simply occurs as result of the intended correction and is directly given and not monitored. Namely, an OK lens for correcting low myopia will have a shorter Back Optic Zone Radius (BOZR) of curvature that a lens for high myopia. Hence, with a state-of-the-art spherical optic zone orthokeratology lens, the shaped cornea can produce a larger peripheral defocus when the myopia correction is high, and unfortunately, in the case of a low myopia a very small peripheral defocus, giving to a poor and non-efficacy control of the development of myopia.

The current state-of-the-art spherical base curve works well to adjust the amount of refractive correction, but because the radius of curvature is just determined for central refractive correction only provides proper visual signal to stop axial length growth in children in high myopia, making the treatment inefficacy for low incipient myopes.

After the publication by Chen C. in 2022 of his scientific articles, several patents claimed a benefit of an aspherical optical zone for orthokeratology.

The aspheric surface can be described by a conic section defined by its curvature radius and by a parameter measuring surface eccentricity (asphericity). Conic sections, obtained by cutting a cone by a plane, include oblate and prolate ellipses, hyperbolas, and parabolas. Another proper parameter is the ellipse's apical radius and its eccentricity. These are defined as terms by a second-order equation where the apical radius is $R_0$, and the eccentricity is "e". The apical radius is that of the circle tangent to the apex of the conic section, and "e" describes the variation of this curve with distance from the apex. Aspherical prolate surface with same $R_0$ will have less sagittal height than a spherical surface at the same distance from the axis. Equivalently, higher height or separation from corneal surface and the end annular circle of optic zone will induce that the next curve of an orthokeratology lens, what is called the reverse curve must have shorter radius of curvature to compensate this height, creating a marked peripheral molding and controlling better axial eye growth in myopic children.

To cite some examples, CN106291977A, CN112147796A, CN113671723A, CN113671724A, CN115793279A, and the US2022291524A1 characterize an orthokeratology lens in that the optic zone of the lens is aspherical.

In addition to the previous patent documents, CN215986770U includes an aspherical design of the fitting area or peripheral curves. It may be the case that all the lens curves will be aspherical, as is shown in US40196795A of El Hage.

The rationale is to induce a higher separation from the edge of the optical zone to the underlying cornea where the lens is applied. This increases the distance to the corneal area below, which is filled by tears and called a tear reservoir. This enhanced tear reservoir increases the mid-peripheral epithelial molding, generating higher peripheral defocus and better myopia control.

Even using an aspheric base curve can achieve a more significant amount of defocus, but with an excess of central refractive correction and not reaching a proper visual comfort for the patient.

Furthermore, an optical zone that is aspherical in shape modifies the central cornea in an undesired mode, creating a hypercorrection of the eye's refractive error. Thus, giving an optical signal that may enhance myopia progression, creating a vision problem and discomfort.

An intent of increasing the tear thickness at the end of the optical zone was disclosed in WO2018234666A1, which proposed splitting the back optic area into two spherical sections, having the adjacent circular area a flatter (larger) radius than the inner central one. Results of this construction provides an unstable and irregular correction of the eye's refractive error, because the angle created between both spherical curves induces discomfort and uneven refractive correction in low myopes. Moreover, with that design since overcorrection occurs in low myopes, a compensative steepening of the central spherical area is needed, inducing of what is called a "central island" or central area of under correction that delivers double vision and haloes to the patients. Making the design not suitable for the correction of the low myopes.

It is, therefore, necessary to provide an alternative to the state of the art which covers the gaps found therein, by providing an orthokeratology contact lens which overcomes the above mentioned shortcomings, and hence provides a better and effective myopia control, accurately correcting central refractive error while producing mid peripheral corneal curvature increase, hence defocus amount, in a precisely controlled way.

SUMMARY OF THE INVENTION

To that end, the present invention relates to an orthokeratology contact lens for a wearer's eye, comprising an inner surface with a back optical zone intended to face or be in contact with said wearer's eye, wherein said back optical zone has, about a geometric central axis of the lens, a central circular area and at least one annular area radially extending outwardly from the end of said central circular area.

In contrast to the orthokeratology contact lenses of the prior art, in the one of the present invention, in a characterizing manner, in a cross-section of the orthokeratology contact lens, taken along a plane that includes the geometric central axis, the central circular area and the at least one annular area conform a continuous polynomial-shaped curvature path, wherein:

- the central circular area is an aspherical surface, with an apical axial radius and an eccentricity (e value) between 0 and 1 (i.e., low aspherical), and
- the at least one annular area with a radius of curvature that gradually, in progressive mode, and not linearly, increases from the end of the central circular area to an end of the back optical zone.

The central circular and at least one annular areas, coupled, form what is called the back optical zone.

For an embodiment, the central circular area is of 0.50 to 3.00 mm of diameter.

According to an embodiment, the end of the back optical zone has, in said cross-section, a height, or sagittal distance, between 30 and 250 microns, preferably between 20 and 220 microns, with respect to an imaginary spheric reference surface on which the back optical zone rests, wherein said imaginary spheric surface is an extension/prolongation of the apical radius of curvature of central optical zone

The apical curvature surface of the lenses has an apical radius of curvature ranging from 7.00 to 10.00 mm.

For an implementation of the above embodiment, the back optical zone has a diameter ranging from 4.00 mm to 5.5 mm, preferably from 4.00 mm to 4.5 mm, and the above height, or sagittal distance, ranges from 30 to 100 microns.

For an alternative implementation, the back optical zone has a diameter of 7 mm and the above height, or sagittal distance, ranges from 60 to 250 microns.

In an embodiment, the at least one annular area has a conical shape.

According to an embodiment, the radius $r_a$ at every given point of the above mentioned continuous polynomial-shaped curvature path follows the formula:

$$r_a = \sqrt{(r^2 + x^2)y^2} \tag{1}$$

**where** r **is** the radius with respect to the geometric central axis of the lens, $x$ is the coefficient factor (e value) ,and y is the distance to the geometric central axis of the lens, wherein x ranges between 0 and 1 for the central area and 0 to 8 for the annular area.

In an implementation of that embodiment, x ranges from 0 to 8, for the at least one annular area.

According to an embodiment, the above mentioned height, or sagittal distance, and also the height, or sagittal distance, of the end of the central circular area with respect to the above mentioned imaginary spheric reference surface, is calculated with the following formula:

$$Sagittal\ distance\ \ = \frac{r_1 - \sqrt{r_1{}^2 - (1-x^2)y}}{(1-x^2)} - \frac{r_a - \sqrt{r_a{}^2 - y}}{1} \tag{2}$$

where $r_1$ is the axial radius, in said cross-section, of the central circular area or at least one annular area, $r_a$ is the axial radius of the cornea of said wearer's eye, x is the coefficient factor, and y is the distance to the geometric central axis of the lens.

For some embodiments, y ranges from 2 to 3.5 mm, and is typically of 2.50 mm.

According to an embodiment, the orthokeratology contact lens includes, as prior art, a consecutively from the end of back optical zone, a reverse curved portion, a fitting or alignment curved portion (spherical or aspherical), and an edge curved portion, wherein said fitting or alignment curved portion includes an inner curved region, radially departing from the reverse curved portion, and an outer curved region, wherein said inner curved region has a larger radius of curvature than said outer curved region, and wherein said inner and outer curved regions converge into a vertex and form a cavity where, in use, tears may accumulate.

The reverse curved portion may be divided in two or more sections including aspherical shapes, for some embodiments.

For an implementation of that embodiment, the fitting or alignment curved portion mimics and follows the shape of an aspheric surface of reference.

The benefits of the lens of the present invention are to achieve the correct central refractive correction, since current lenses with aspherical or conical back optical zone typically overcorrect or induces irregular correction that produces discomfort to the wearer.

Secondly, it allows to mold in independent way the midperiphery, achieving a stronger change in curvature (even in case of no apical (on axis) refractive change). A strong midperipheral increase in positive sign power is scientifically proven to an enhanced myopia control, compared to regular lenses.

Third, the construction associated to the lens of the present invention avoids any angles, junctions or abrupt changes of curvature in the inner surface of the lens, hence avoids troubles in eye health and wearer discomfort.

By adopting the technical solution provided by the lens of the present invention, a better effect of delaying the growth of the eye's axial length can be obtained.

In summary, the present invention provides the following beneficial technical effects:

1. The orthokeratology lens proposed by the present invention can effectively control the shape of the final corrected cornea, with central proper refractive outcome.
2. Controlled mid-peripheral corneal steepening which increase the defocus amount and the signals for myopia control.
3. The delivered lens design has a progressive transition in shape and provides comfort.

BRIEF DESCRIPTION OF THE DRAWINGS

In order to better understand the description made, a set of drawings has been provided which, schematically and solely by way of non-limiting example, represent a practical case of embodiment.

Figure 1 schematically shows an embodiment of the orthokeratology contact lens of the present invention, for an embodiment, by means of a lens side elevation view cross-section.
Figure 2 is a plot schematically showing the height, or sagittal distance, or Points 1 and 2 identified in Figure 1, for an embodiment.
Figure 3 schematically shows a tangent union between the central circular area and the annular area of the embodiment of Figures 1 and 2.

## DESCRIPTION OF THE PREFERRED EMBODIMENTS

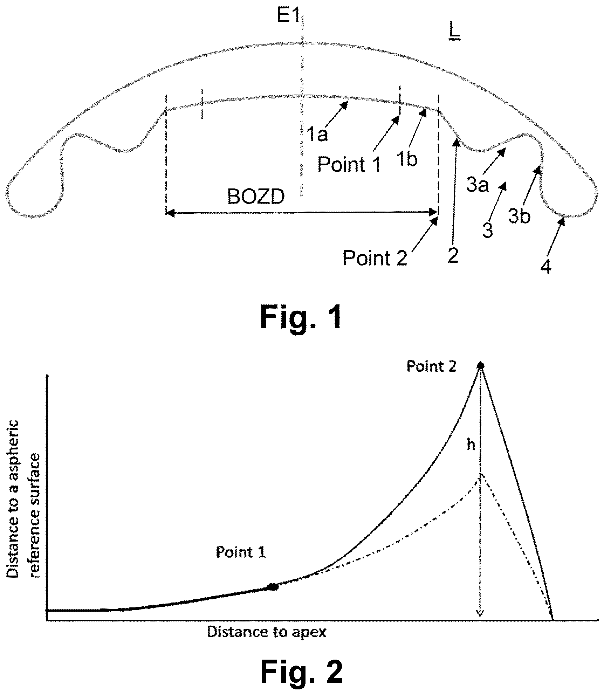

In the present section, different embodiments of the lens of the present invention are described with reference to the appended figures, particularly of orthokeratology lenses in Figures 1 to 4 and 7, and of ophthalmic contact lenses in Figures 5, 6 and 7.

As disclosed in a previous section, and shown in Figure 1, for an embodiment, the present invention concerns an orthokeratology contact lens L for a wearer's eye, comprising an inner surface (lower surface, according to the position illustrated in Figure 1) with a back optical zone intended to face or be in contact with the wearer's eye, and configured and arranged to, in use, modify the optics of the cornea of the wearer's eye, wherein said back optical zone has, about a geometric central axis E1 of the lens L, a central circular area 1a and an annular area 1b radially extending outwardly from the end of the central circular area 1a.

In a cross-section of the orthokeratology contact lens L, taken along a plane that includes the geometric central axis E1, i.e., in a cross-section as that illustrated by Figure 1, the central circular area 1a and the annular area 1b conform a continuous polynomial-shaped curvature path, wherein:

- the central circular area 1a has a spherical radius or a radius having an eccentricity (e value) between 0 and 1, and
- the annular area 1b has a radius of curvature that gradually, in progressive mode, and not linearly, increases from the end of the central circular area 1a to an end of the back optical zone.

The diameter of the back optical zone has been indicated in Figure 1 by the initialism BOZD.

As seen in Figure 1, for the illustrated embodiment, the lens L comprises, sequentially and radially extending from the geometric central axis E1, the central circular area 1a, the annular area 1b (which could include two or more annular subareas), which conform the back optical zone, and, consecutively from the end of the back optical zone, a reverse curved portion 2, a fitting or alignment curved portion 3, and an edge curved portion 4, wherein the fitting or alignment curved portion 3 includes an inner curved region 3a, radially departing from the reverse curved portion 2, and an outer curved region 3b, wherein said inner curved region 3a has a larger radius of curvature than the outer curved region 3b, and wherein the inner 3a and outer 3b curved regions converge into a vertex and form a cavity where, in use, tears may accumulate.

The radius $r_a$ at every given point of the continuous polynomial-shaped curvature path and the sagittal distances of the central circular area 1a and annular area 1b are respectively calculated with equations (1) and (2) disclosed above.

Remaining parameters will follow state of the art, and the reverse curved portion 2 will be calculated to return alignment to the cornea of the wearer's eye and will be used to store tears and increase corneal epithelial cell layer; it may be composed by one or several curves, spherical or aspherical, the fitting or alignment curve portions 3 can be determined as in a number from 1 to 7; the edge curved portion 4 will be used to provide a flow channel for tear fluid between the cornea and the lens L.

Figure 2 depicts, by means of a solid line, the sagittal distances for Points 1 and 2, identified in Figure 1, i.e., for the end of the central circular area 1a and the end of the annular area 1b, respectively. In this case, an internal spherical shape is defined until Point 1 (i.e., for central circular area 1a), followed by a conic surface until Point 2 (i.e., for annular area 1b). Providing a predetermined height of an imaginary aspheric surface is representative of the apical curvature surface of the wearer's eye. Dashed line represents the regular state of the art.

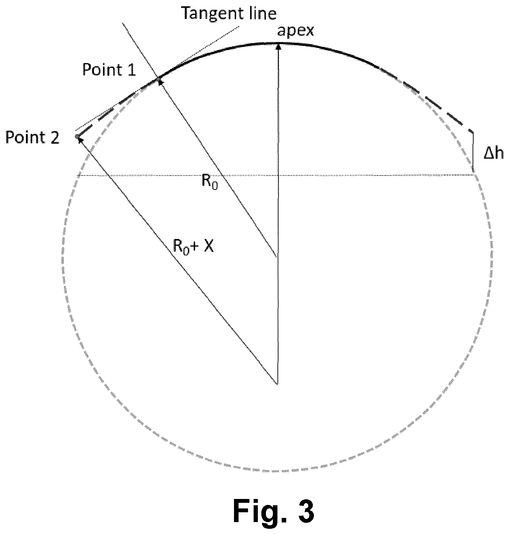

Figure 3 shows a tangent union between the central circular area 1a and the annular area 1b of the embodiment of Figures 1 and 2, identifying the local axial radius $R_0$ at which Point 1 is same radius from the annular curve, modifying curve annular his radius to achieve a radius $R_0+X$ at point 2

The technical solution provided by the lens of the present invention achieves to obtain a desired and proper final height at the edge of the back optical zone. This height is established in the case of a minimum optic zone diameter of 4.00 mm between 30 to 50 microns, and in the case of the largest diameter of 7.00 mm between 90 to 220 microns.

In that case, to achieve these values in low myopia the eccentricity values for the outer section of the optic zone needs to reach values between 0 to 8.

The benefits of such construction are to achieve the correct central refractive correction, since current lenses with aspherical or conical back optical zone typically overcorrect or induces irregular correction that produces discomfort to the wearer.

Secondly, it allows to mold in independent way the midperiphery, achieving a stronger change in curvature (even in case of no apical (on axis) refractive change). A strong midperipheral increase in positive sign power is scientifically proven to an enhanced myopia control, compared to regular lenses.

Third, this construction avoids any angles, junctions or abrupt changes of curvature in the inner surface of the lens, hence avoids troubles in eye health and wearer discomfort.

By adopting the above-mentioned technical solution, a better effect of delaying the growth of the eye's axial length can be obtained.

A person skilled in the art could introduce changes and modifications in the embodiments described without departing from the scope of the invention as it is defined in the attached claims.

**Claims**

1.   An orthokeratology contact lens (L) for a wearer's eye, comprising an inner surface with a back optical zone intended to face or be in contact with said wearer's eye, wherein said back optical zone has, about a geometric central axis (E1) of the lens (L), a central circular area (1a) and at least one annular area (1b) radially extending outwardly from the end of said central circular area (1a), **characterized in that** in a cross-section of the orthokeratology contact lens (L), taken along a plane that includes said geometric central axis (E1), said central circular area (1a) and said at least one annular area (1b) conform a continuous polynomial-shaped curvature path, wherein:

   - said central circular area (1a) is an aspherical surface, with an apical axial radius and an eccentricity, or e value, between 0 and 1, and
   - said at least one annular area (1b) has a radius of curvature that gradually, in progressive mode, and not linearly, increases from the end of the central circular area (1a) to an end of the back optical zone.

2.   The orthokeratology contact lens (L) of claim 1, wherein said central circular area (1a) is of 0.50 to 3.00 mm of diameter.

3.   The orthokeratology contact lens (L) of claim 1 or 2, wherein said end of the back optical zone has, in said cross-section, a height, or sagittal distance, between 20 and 220 microns with respect to an imaginary spheric reference surface on which the back optical zone rests, wherein said imaginary spheric surface is the prolongation of apical radius of curvature of the central circular area (1a).

4.   The orthokeratology contact lens (L) of claim 3, wherein said apical curvature surface of the wearer's eye has an apical radius of curvature ranging from 7 to 10 mm.

5.   The orthokeratology contact lens (L) of claim 3 or 4, wherein the back optical zone has a diameter ranging from 4.00 mm to 4.5 mm and said height, or sagittal distance, ranges from 30 to 100 microns.

6.   The orthokeratology contact lens (L) of claim 3 or 4, wherein the back optical zone has a diameter of 7 mm and said height, or sagittal distance, ranges from 60 to 250 microns.

7.   The orthokeratology contact lens (L) of any of the previous claims, wherein said at least one annular area (1b) has a conical shape.

8.   The orthokeratology contact lens (L) of any of the previous claims, wherein the radius $r_a$ at every given point of said continuous polynomial-shaped curvature path follows the equation:

$$r_a = \sqrt{(r^2 + x^2)y^2} \qquad (1)$$

   where r is the radius with respect to the geometric central axis (E1) of the lens (L), x is the coefficient factor, or e value, and y is the distance to the geometric central axis (E1) of the lens (L), wherein x ranges between 0 and 8 for the at least one annular area (1b).

9.   The orthokeratology contact lens (L) of claim 8, wherein x ranges from 0 to 8, for the at least one annular area (1b).

10.   The orthokeratology contact lens (L) of claim 9 when depending on claim 3, wherein said height, or sagittal distance, and also the height, or sagittal distance, of the end of the central circular area (1a) with respect to said imaginary spheric reference surface, is calculated with the following formula:

$$Sagittal\ distance\ = \frac{r_1 - \sqrt{r_1^2 - (1-x^2)y}}{(1-x^2)} - \frac{r_a - \sqrt{r_a^2 - y}}{1} \qquad (2)$$

   where $r_1$ is the axial radius, in said cross-section, of the central circular area (1a) or at least one annular area (1b), $r_a$ is

the axial radius of the cornea of said wearer's eye, x is the coefficient factor, and y is the distance to the geometric central axis (E1) of the lens (L).

11. The orthokeratology contact lens (L) of claim 8, 9 or 10, wherein y ranges from 2 to 3.5 mm.

12. The orthokeratology contact lens (L) of any of the previous claims, wherein said at least one annular area (1b) Further comprising, consecutively from the end of the back optical zone, a reverse curved portion (2), a fitting or alignment curved portion (3), and an edge curved portion (4), wherein said fitting or alignment curved portion (3) includes an inner curved region (3a), radially departing from the reverse curved portion (2), and an outer curved region (3b), wherein said inner curved region (3a) has a larger radius of curvature than said outer curved region (3b), and wherein said inner (3a) and outer (3b) curved regions converge into a vertex and form a cavity where, in use, tears may accumulate.

13. The orthokeratology contact lens (L) of claim 12, wherein said fitting or alignment curved portion (3) mimics and follows the shape of an aspheric surface of reference.

**Fig. 1**

**Fig. 2**

**Fig. 3**

| | Europäisches Patentamt |
|---|---|
| | European Patent Office |
| | Office européen des brevets |

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/183409 A1 (SHENYANG KANGENDE MEDICAL SCIENCE AND TECH CO LTD [CN]) 9 September 2022 (2022-09-09) | 1-11 | INV. G02C7/04 |
| Y | * the whole document * | 12,13 | |
| X | EP 3 349 055 A1 (EYEBRIGHT MEDICAL TECH BEIJING CO LTD [CN]) 18 July 2018 (2018-07-18) | 1-11 | |
| Y | * the whole document * | 12,13 | |
| Y | EP 4 273 619 A1 (PAUNE FABRE JAIME [ES]) 8 November 2023 (2023-11-08) * abstract; figures * | 12,13 | |
| A | US 2018/329227 A1 (CHOW EDWARD [CA]) 15 November 2018 (2018-11-15) * the whole document * | 1-13 | |
| A | JAISANKAR DURGASRI ET AL: "Nasal-temporal asymmetry in peripheral refraction with an aspheric myopia control contact lens", BIOMEDICAL OPTICS EXPRESS, vol. 11, no. 12, 1 December 2020 (2020-12-01), pages 7376-7394, XP093181901, United States ISSN: 2156-7085, DOI: 10.1364/BOE.406101 * the whole document * | 1-13 | **TECHNICAL FIELDS SEARCHED (IPC)** G02C |

The present search report has been drawn up for all claims

| Place of search | Date of completion of the search | Examiner |
|---|---|---|
| Munich | 2 March 2026 | Windecker, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 38 2994

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2026

| Patent document cited in search report | Publication date | Patent family member(s) | Publication date |
|---|---|---|---|
| WO 2022183409    A1 | 09-09-2022 | CN    113924070 A | 11-01-2022 |
| | | CN    115381622 A | 25-11-2022 |
| | | EP      4278230 A1 | 22-11-2023 |
| | | JP      7701458 B2 | 01-07-2025 |
| | | JP    2024509767 A | 05-03-2024 |
| | | JP    2025131874 A | 09-09-2025 |
| | | KR   20230128374 A | 04-09-2023 |
| | | KR   20260004583 A | 08-01-2026 |
| | | US    2023103752 A1 | 06-04-2023 |
| | | US    2023221581 A1 | 13-07-2023 |
| | | US    2024210732 A1 | 27-06-2024 |
| | | US    2024210733 A1 | 27-06-2024 |
| | | WO    2022183409 A1 | 09-09-2022 |
| EP 3349055      A1 | 18-07-2018 | EP      3349055 A1 | 18-07-2018 |
| | | HK      1250262 A1 | 07-12-2018 |
| | | JP      6931349 B2 | 01-09-2021 |
| | | JP    2018523171 A | 16-08-2018 |
| | | JP    2021099493 A | 01-07-2021 |
| | | KR   20180034515 A | 04-04-2018 |
| | | SG 11201800595Q A | 27-02-2018 |
| | | US    2018210229 A1 | 26-07-2018 |
| | | US    2020117024 A1 | 16-04-2020 |
| | | US    2022317478 A1 | 06-10-2022 |
| | | WO    2017016440 A1 | 02-02-2017 |
| EP 4273619      A1 | 08-11-2023 | EP      4273619 A1 | 08-11-2023 |
| | | US    2023359067 A1 | 09-11-2023 |
| US 2018329227   A1 | 15-11-2018 | CA      2996121 A1 | 24-08-2018 |
| | | CN    108508630 A | 07-09-2018 |
| | | US    10001660 B1 | 19-06-2018 |
| | | US    2018329227 A1 | 15-11-2018 |
| | | US    2020285073 A1 | 10-09-2020 |
| | | US    2023204977 A1 | 29-06-2023 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106291977 A
- CN 112147796 A
- CN 113671723 A
- CN 113671724 A
- CN 115793279 A
- US 2022291524 A1
- CN 215986770 U
- US 40196795 A
- WO 2018234666 A1